## Europäisches Patentamt

## European Patent Office

## Office européen des brevets

(19)

(11) Veröffentlichungsnummer : **0 216 317**
**B1**

(12) **EUROPÄISCHE PATENTSCHRIFT**

(45) Veröffentlichungstag der Patentschrift :
20.09.89

(21) Anmeldenummer : 86112913.8

(22) Anmeldetag : 18.09.86

(51) Int. Cl.⁴ : **B 29 C 67/00** // B29L31:60

(54) Verfahren zum Verschliessen der offenen Stirnseiten von Hohlplatten.

(30) Priorität : 27.09.85 DE 3534503

(43) Veröffentlichungstag der Anmeldung :
01.04.87 Patentblatt 87/14

(45) Bekanntmachung des Hinweises auf die Patenterteilung : 20.09.89 Patentblatt 89/38

(84) Benannte Vertragsstaaten :
FR GB IT NL

(56) Entgegenhaltungen :
Keine

(73) Patentinhaber : **Röhm GmbH**
**Kirschenallee Postfach 4242**
**D-6100 Darmstadt 1 (DE)**

(72) Erfinder : **Kappler, Christoph**
**Am Eisernen Schlag 61**
**D-6000 Frankfurt 50 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zum Verschließen der offenen Stirnseiten von Hohlplatten mit flexiblen Materialien, wie z. B. Polyäthylen.

Hohlplatten bestehen aus mindestens zwei Deckplatten, die durch Stege im gegenseitigen Abstand gehalten sind, so daß Stege und Deckplatten Hohlräume umschließen. Hohlplatten aus Polymethylmethacrylat oder aus Polycarbonat dienen z. B. als lichtdurchlässige Elemente auf dem Bausektor. Solche Hohlplatten aus thermoplastischen Kunststoffen können mittels eines Strangpreß-Spritzwerkzeuges mit breitem Austrittsdüsenprofil, wie in der DE-A 15 04 800 für die Herstellung handelsüblicher Stegdoppelplatten beschrieben, gefertigt werden.

Die bei der großtechnischen Fertigung anfallenden Hohlkörper sind nach dem Schneiden auf Gebrauchsmaße an den Stirnseiten offen, wodurch die Gefahr von Beschädigungen bei Handhabungen und darüber hinaus die von Verschmutzungen der Hohlräume, z. B. beim Lagern besteht. Maßnahmen zur Behebung dieser Schwierigkeiten bestanden darin, daß man Stirnseiten mit Folien, z. B. Klebefolien oder Aluminiumfolien versah. Diese Abdeckform erwies sich aber mit den Klebefolien als umständlich, und das Arbeiten mit Aluminiumfolien zudem noch als teuer.

In der DE-C 27 08 758, die den Ausgangspunkt des Anmeldung darstellt, ist ein vorgefertigtes Verschlußelement beschrieben, bei dem auf einer Seite eines flexiblen Bandes druckknopfartige Erhebungen angeordnet sind und das mit diesen Erhebungen in die Hohlraumquerschnitte an der Stirnseite der Platte relativ fest eingesetzt wird. Diese Verschlußelemente können aus Kunststoffen, beispielsweise Polyäthylen oder Äthylen-Copolymeren hergestellt sein und müssen speziell, beispielsweise durch Spritzgießen, angefertigt werden.

Handelsübliche Hohlplatten aus thermoplastischen Kunststoffen sind beispielsweise als Stegdoppelplatte oder als Stegdreifachplatte, und dazu auch noch in verschiedenen Stärken z. B. in Gesamtdicken von etwa 3 mm bis 40 mm, auf dem Markt. Dies bedeutet, daß die nach DE-C 27 08 758 vorzufertigenden Verschlußelemente in verschiedenen Profilen, d. h. mit einer oder mehreren Reihen der « Druckknopf »-artigen Verschlüsse und weiter die « Druckknöpfe » in verschiedener Größe und Anordnung zueinander, vorhanden sein mussen. Diese vielen möglichen Verschlußprofile machen deren notwendige Anwendung jedoch teuer und praktisch undurchführbar.

Der Erfindung liegt daher die Aufgabe zugrunde, für die zahlreichen und möglichen Größen von offenen Stirnseiten an Hohlkammerplatten ein Verfahren zu deren Verschließen zu finden, das einfach ist und sich z. B. ohne großen maschinellen Aufwand und ohne größere maschinelle Anpassungen an den verschiedenen Hohlkammern durchführen läßt.

Diese Aufgabe wird durch die kennzeichnenden Merkmale des Anspruchs 1 gelöst. Dabei wird das flexible, gegebenenfalls auf einen bestimmten Temperatur gehaltene Material in Form einer Schnur bzw. eines Bandes an die Stirnseite der Hohlplatte angelegt und teilweise so in die Hohlräume eingedrückt wird, daß man dadurch eine Abdeckung mit « Halbperlen »-kettenartiger Struktur, mit Noppen in den Hohlräumen und einer praktisch ebenen Fläche an der Außenseite erzielt. Beim Arbeiten mit z. B. auf Umformtemperatur erwärmten thermoplastischen Materialien, schrumpfen beim Abkühlen die in die Hohlräume eingepreßten Materialien auf die Stege und die Platten, wodurch diese ziemlich dicht verschlossen werden. Die geschrumpften Eindrücke können je nach Schrumpfungsgrad des Materials einen mehr oder weniger stark ausgebildeten konvexen Meniskus zeigen.

Der nach dem erfindungsgemäßen Verfahren gebildete Verschluß läßt sich bei Bedarf wieder leicht durch reißverschlußartiges Abziehen, gegebenenfalls mit Hilfe einer speziell dafür vorgesehenen Vorrichtung, von der Stirnkante entfernen. Durch das erfindungsgemäße Verschließen werden Hohlplatten verschiedenster Dimensionierung einfach und schnell vor Verschmutzung geschützt, und die empfindlichen Stirnkanten widerstehen so bei Lagerung und Transport oder sonstiger Handhabung den erhöhten Beschädigungsverfahren. Bei bestimmten Verwendungen der Platten können die erzeugten Verschlüsse auf deren Stirnseiten auch aufgesteckt bleiben. Andererseits können einmal nach dem Verfahren hergestellte und verwendete Verschlüsse wiederverwendet werden.

Zwecks leichter Unterscheidung verschiedener Hohlplatten und zu deren besseren Kennzeichnung können die zum Verschließen verwendeten Materialien auch eingefärbt sein. Die für die Herstellung der Verschlüsse nach dem erfindungsgemäßen Verfahren zu verwendenden Materialien sollen eine gewisse Flexibilität, Elastizität und Abriebfestigkeit haben. Weiter soll die Verarbeitungstemperatur der Materialien in einem Bereich von 40 bis 200 °C, vorzugsweise in einem solchen von 50 bis 100 °C liegen, und die zu verwendenden Materialien sollen in Form von Schnur oder Band maschinell einfach zum Verschließen der Stirnseiten verarbeitbar sein. Die zu verwendende Schnur bzw. das Band kann auch direkt vor dem erfindungsgemäßen Verschließen der offenen Stirnseiten nach bekannten Verfahren, insbesondere durch Extrusion hergestellt sein, und die Herstellung der Schnur oder des Bandes mit der für die Verschließung notwendigen Temperatur, kann Teil des erfindungsgemäßen Verfahrens sein. Die maschinelle Vorrichtung zum Einpressen des geformten flexiblen Materials in die Hohlkammern, kann dann ein Zusatzteil eines Extruders sein. Für die rationelle Druchführung des erfindungsgemäßen Verfahrens muß die maschinelle Vorrichtung mit Halterungen für verschieden dimensionierte Schnüre oder Bänder ausgerüstet sein und das Einpressen des Formstücks aus flexiblem Material kann durch Bewegen der Schnur- bzw. Bandseite oder durch Bewegung der Hohlplatte oder durch Aufeinanderzubewegen beider zu verbindenden Teile erfolgen. Das Einpressen der auf Umformtemperatur gehaltenen Schnur oder des Bandes, er fordert normalerwlese nur leichten Druck. Nach Beendigung des Verschließvorgangs wird der hergestellte Verschluß vom übrigen Strang, z. B. durch Schneiden, abgetrennt.

Werkstoffe, welche die genannten Eigenschaften besitzen und sich in der angegebenen Weise bearbeiten lassen, sind insbesondere thermoplastische Kunststoffe, d. h. Polymere wie beispielsweise Polyäthylen oder Äthylen-Copolymere z. B. mit Vinylacetat. Solche Materialien sind in Bandform oder als Schnur, z. B. als Rundschnur mit Durchmessern von ca. 1 mm bis 40 mm und mehr oder in Bandform in Dicken von ca. 1 mm bis 10 mm und mehr und in verschiedenen Breiten, z. B. von 3 mm bis 30 mm und mehr und verschieden eingefärbt, gängige Handelsprodukte oder können in solchen Dimensionen zum direkten Gebrauch extrudiert werden. Die Schnur kann auch kantiges Profil haben. Im allgemeinen wird der Verschluß so hergestellt, daß dessen Ränder nicht über die Kanten der Deckplatten ragen, sondern vorzugsweise mit diesen abschließen oder etwas niedriger sind.

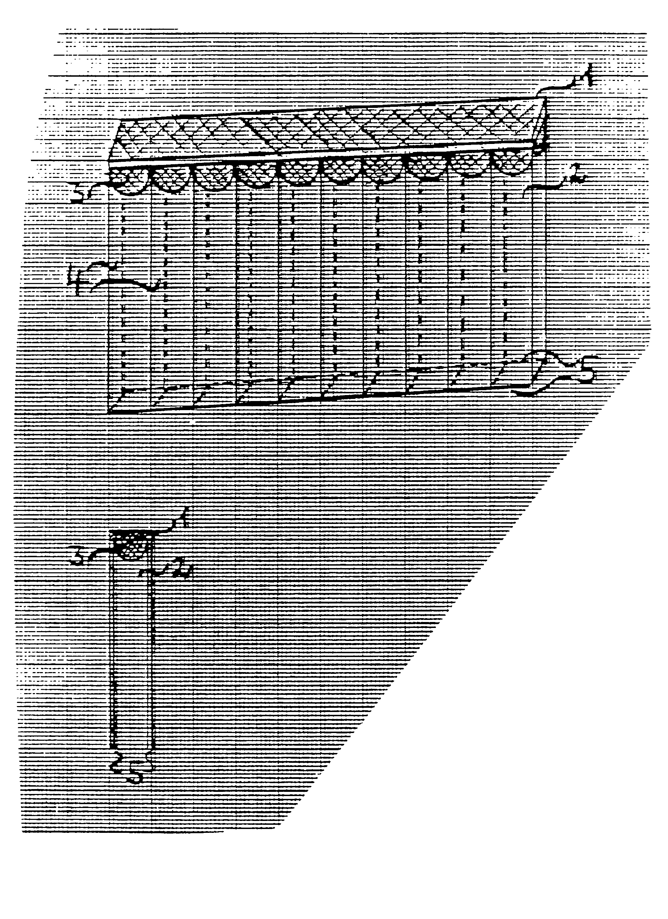

Die Zeichnung zeigt das Aussehen eines erfindungsgemäß hergestellten Hohlplattenverschlusses auf einer Stirnseite im Längs- und Querschnitt. Der Verschluß besteht aus einem flexiblen Rand 1 mit praktisch ebener Außenfläche, von dem in die einzelnen Hohlkammern 2 die, durch Eindrücken und Erkalten des flexiblen Materials entstandenen « Noppen » 3 hineinragen, und die an den Stegen 4 und Deckplatten 5 fest anliegen.

## Patentansprüche

1. Verfahren zum Verschließen der offenen Stirnseiten von Hohlplatten mit thermoplastisch verformbaren, flexiblen in Schnur- oder Bandform vorliegenden Materialien, dadurch gekennzeichnet, daß das flexible Material im thermoplastisch verformbaren Zustand auf der Stirnseite der Hohlplatte in diese hineingepreßt (eingedrückt) wird.

2. Verfahren nach Anspruch 1, dadurch gekennzeichnet, daß das Verfahren maschinell durchgeführt wird.

3. Verfahren nach den Ansprüchen 1 und 2, dadurch gekennzeichnet, daß dem Verschließverfahren die Formgebung des flexiblen Materials zur Schnur oder zum Band unmittelbar vorgeschaltet ist.

4. Verfahren nach den Ansprüchen 1 bis 3, dadurch gekennzeichnet, daß die flexiblen Materialien zum Verschließen, thermoplastische Kunststoffe sind.

5. Verfahren nach den Ansprüchen 1 bis 4, dadurch gekennzeichnet, daß die thermoplastischen Kunststoffe zum Verschließen, Polyäthylen oder Äthylen-Copolymere sind.

6. Verfahren nach den Ansprüchen 1 bis 5, dadurch gekennzeichnet, daß die Außenränder des Verschlusses nicht über die Kanten der Deckplatte hinausgehen.

## Claims

1. Process for sealing the open end faces of hollow plates with thermoplastically deformable flexible materials available in string or strip form, characterised in that the flexible material is pressed, in the thermoplastically deformable state, into the hollow plate at the end face thereof.

2. Process according to claim 1, characterised in that the process is carried out by machine.

3. Process according to claims 1 and 2, characterised in that the sealing process is immediately preceded by the shaping of the flexible material into a string or strip.

4. Process according to claims 1 to 3, characterised in that the flexible materials for sealing are thermoplastic plastics.

5. Process according to claims 1 to 4, characterised in that the thermoplastic plastics used for sealing are polyethylene or ethylene copolymers.

6. Process according to claims 1 to 5, characterised in that the outer edges of the seal do not protrude beyond the edges of the covering plate.

## Revendications

1. Procédé pour la fermeture des côtés frontaux ouverts de plaques creuses avec des matériaux flexibles, déformables thermoplastiquement, sous forme de cordon ou de ruban, caractérisé en ce que le matériau flexible est introduit de force (enfoncé) dans la plaque creuse, sur le côté frontal de celle-ci, à l'état déformable thermoplastiquement.

2. Procédé selon la revendication 1, caractérisé en ce que le procédé est exécuté à la machine.

3. Procédé selon la revendication 1 ou 2, caractérisé en ce que le façonnage du matériau flexible sous forme de cordon ou de ruban précède immédiatement l'opération de fermeture.

4. Procédé selon l'une quelconque des revendications 1 à 3, caractérisé en ce que les matériaux flexibles pour la fermeture sont des matières synthétiques thermoplastiques.

5. Procédé selon l'une quelconque des revendications 1 à 4, caractérisé en ce que les matières synthétiques thermoplastiques pour la fermeture sont des polyéthylènes ou des copolymères d'éthylène.

6. Procédé selon l'une quelconque des revendications 1 à 5, caractérisé en ce que les bords extérieurs de la fermeture ne font pas saillie sur les bords des plaques de recouvrement.